# EUROPEAN PATENT APPLICATION

(11) **EP 1 216 760 A2**
(43) Date of publication of application: **26.06.2002**
(21) Application number: 01870279.5
(22) Date of filing: 18.12.2001
(51) Int. Cl.: B06B 1/02, B23K 20/10, B29C 65/08

(54) **Power generator for ultrasonic welding with digital control of the frequency and power**

(30) Priority: 20.12.2000 IT BS000131
(71) Applicant: Digitec S.r.l., 25126 Brescia (IT)
(72) Inventor: Ferraboli, Aurelio, 25060 Concesio (Brescia) (IT); Lola, Gianfranco, 25128 Brescia (IT)
(74) Representative: Kuborn, Jacques

(57) **Abstract**

This invention relates to a power generator for an ultrasonic welding head made up of an emitter, a mechanical amplifier and a sonotrode, to supply energy to an ultrasonic transducer in the form of a preset alternating amplitude and frequency signal. It comprises, in combination, a power feeder, a power converter, a power transformer, a phase and frequency control device for controlling the power converter, and a micro-controller programmed for digital control of frequency and power of the piloting signal of the ultrasonic transducer, so as to tune the frequency of the generator to that of the emitter and to compensate sonotrode frequency variations.

## Description

### Field of invention

The present invention regards the ultrasonic welding field and refers in particular to a power generator for such welding.

### State of the Art

Ultrasonic welding of metal or plastic parts is usually carried out using at least one welding head, comprises of an emitter, a mechanical amplifier and a sonotrode. The emitter is made up of a sandwich of piezoelectric ceramics compressed between two metal masses. The ceramics, fed by a generator, produce the vibrations of the emitter. The mechanical amplifier amplifies the vibrations coming from the emitter and makes them suitable to be sent to the sonotrode. The latter, resting on the plastic parts to be welded, transmits the vibration that heats the material until it melts. The amplifier and the sonotrode must be tuned to the operating frequency of the emitter.

As technicians in the sector are well aware, the sonotrode heats during functioning and increases in length with consequent variations in operating frequency. The difference in frequency between the sonotrode and the emitter can therefore cause malfunction or breakage of the piezoelectric ceramics. To avoid this it is good practice always to tune the frequency of the generator with that of the emitter.

### Objects and Summary of invention

The main object of the present invention is to supply a remedy for a similar drawback and to supply a power generator for ultrasonic welding which allows any variations of frequency of the sonotrode due to heating to be compensated thus maintaining tuning with the emitter.

Another object of the invention is to supply a reliable, high precision and reduced size power generator, where all the sizes involved are digitally controlled using a microprocessor system, with possible connection to a bus bar.

These objects are fulfilled using a power generator according to claim 1.

Advantageously, the generator has a power converter having a "Phase shift Resonant Controller" control, in which the operating frequency is achieved by a digitally controlled oscillator; it is governed by a microprocessor and can be actuated individually either by a Personal Computer or a control device, or connected in line with other generators to form multi-head welding machines, using either a control input for RS485 bus or CAN-BUS. Control of the positioning of the welding head is possible by using an encoder to adjust the welding depth, besides control of energy emitted by the head supplying ultrasonic vibrations. Also possible are, on/off manual or from a remote PC control, protection from overload of the welding head, heat protection of the IGBT power transistors, and the controlled activation of the power supply to the ultrasonic transducer so as to increase efficiency and operating life of the vibrating mechanical parts.

### Brief description of drawings

Other details and advantages of the invention are evident from the following description made with reference to the enclosed, indicative and not restrictive drawings, in which:
Fig. 1 shows an overall block diagram series of the power generator;
Fig. 2 shows a block diagram of the power feeder;
Fig. 3 shows a block diagram of the power converter;
Fig. 4 shows a block diagram of the power transformer and the tuning adapter;
Figs. 5 and 5a show a block diagram of the phase control and ultrasonic vibration frequency parts;
Fig. 6 shows a block diagram of the micro-controller; and
Fig. 7 shows a block diagram of the service logic feeder.

### Detailed description of the invention

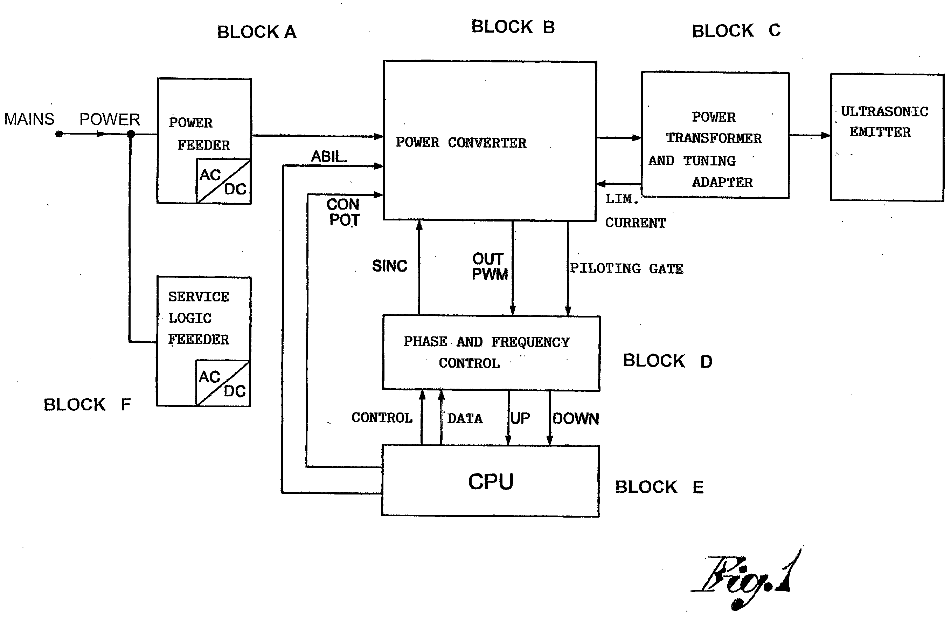

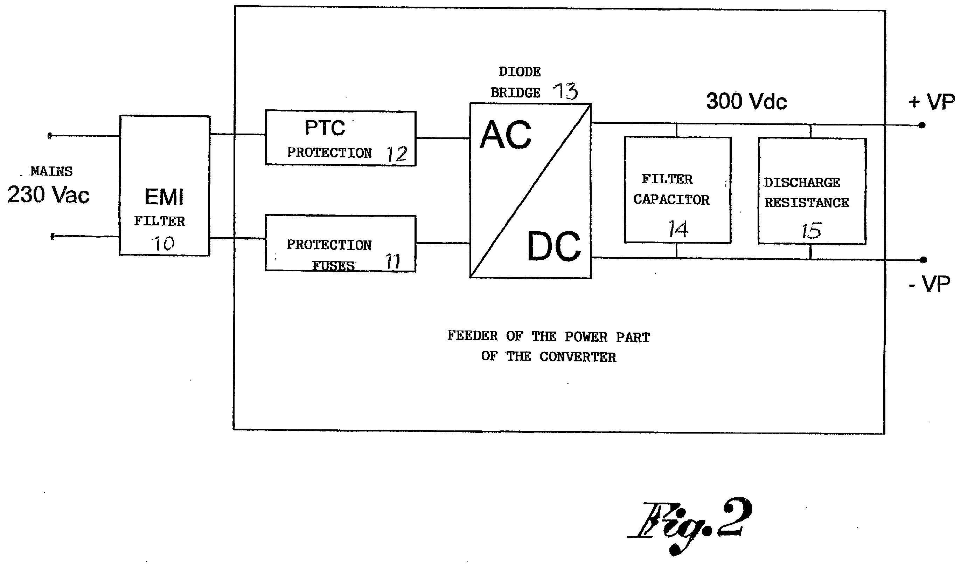

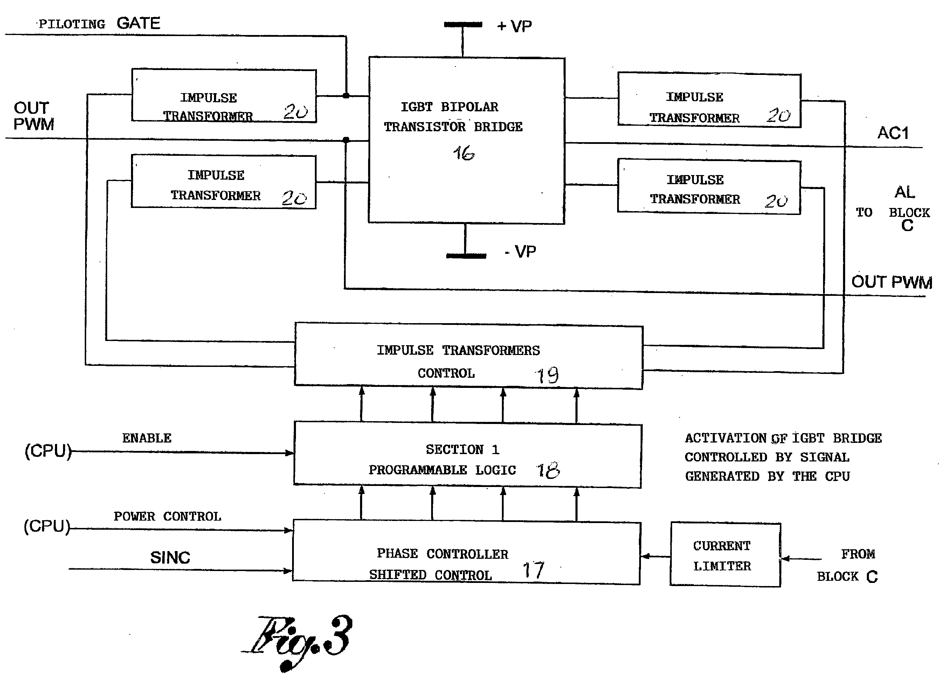

The power generator in question supplies alternating electric voltage for the correct functioning of a ceramic vibrations emitter, compensating any variations in frequency due to heat problems. It comprises essentially into an aluminium container (Fig.1):
- an power feeder (Block A);
- a power converter (Block B);
- a power transformer (Block C);
- a phase and ultrasonic frequency vibrations control device (Block D);
- a micro-processor (Block E); and
- a service logic feeder (Block F).
The power feeder (Fig. 2) filters the mains voltage with a EMI filter 10 so as to avoid the passage of electromagnetic interference coming from the mains, which could disturb the digital components of the device. At the same time, the filter avoids interference produced by the generator from reaching the electric network. The feeder is protected by a fuse 11 which interrupts the flow of current should there be an overload, and it is equipped with a class PTC positive resistance coefficient protection 12 which limits the peak current of the filter condensers. The mains filtered voltage is rectified by a diode bridge 13 and sent to the trimmer capacitors 14 which make the output voltage direct. A resistance 15 is also provided which discharges the capacitors should feed from the electric mains supply fail.

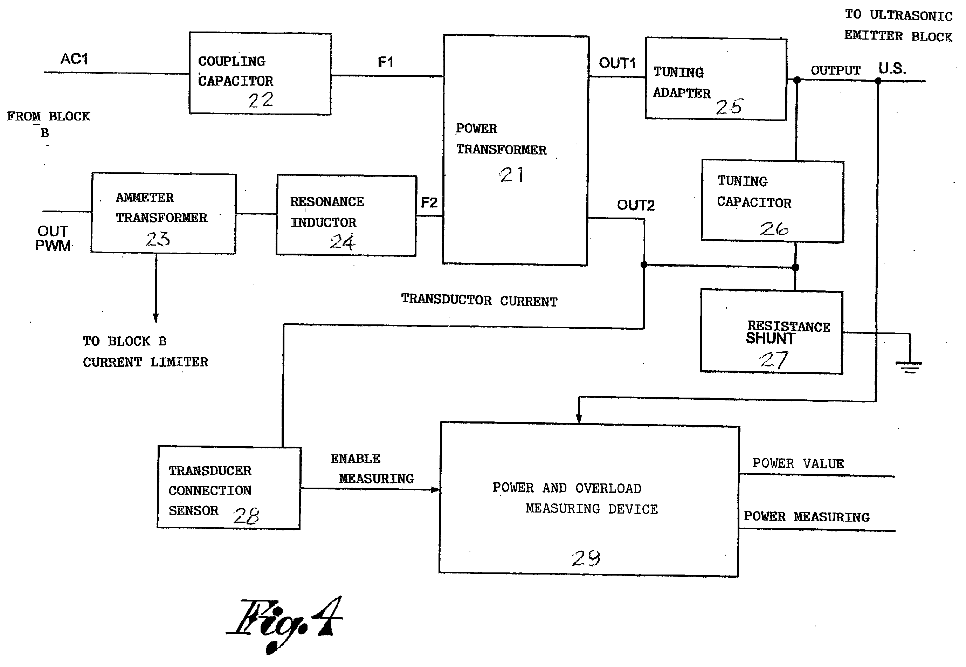

The power converter (Fig. 3) is made up of a control part, governed by a micro-controller (Block E), and by a power part made up of a IGBT dual pole transistor bridge 16. The control part includes a phase controller 17, a section 1 programmable logic device 18, a pulsing transformer control device 19, and a series of pulsing transformers 20. The task of the phase controller is to generate the control phases of the power transistors and is piloted by a "sinc" signal coming from the micro-controller and provided to set the operating frequency and voltage of the converter, from a power control signal also coming from the micro-controller and aimed at controlling the phase shift of the converter, and a current limiting signal coming from the transformer (Block C). The section 1 programmable logic device 18 receives the control signals in input coming from the phase controller 17, it compares them with an enabling signal coming from the micro-controller and sends them to the drive module of the pulsing transformers 19, which amplify the signals and pilots the pulsing transformers 20. These devices are aimed at creating galvanic insulation between the control part and the power part and to suitably pilot the IGBT transistors.

The IGBT bipolar transistor bridge 16 is made up of four power transistors which commute the direct current supplied by the power feeder, transforming it into a square wave output voltage, according to a commutation sequence supplied by the phase controller. The square wave voltage OUT_PWM is sent both to the power transformer (Block C) and the phase and frequency control device (Block D), together with the piloting signal of the power transistors.

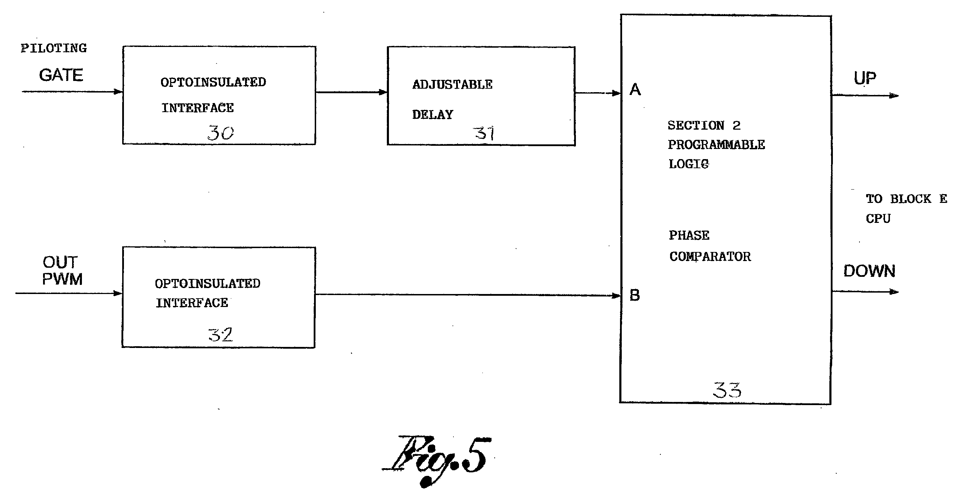

The power transformer and the tuning adapter (Fig. 4) transform the signal arriving from the power converter into a signal suitable to pilot the ultrasonic transducer, tuning it to the frequency of the latter. In particular, the output signal OUT_PWM from the converter, passes, before arriving at the power transformer 21, from one part through a coupling capacitor 22 which guarantees the flow of an alternating current to the transformer, and, on the other part, through an ammeter transformer 23, which enables the current supplied by the transformer to be measured and to limit the excess current, connected in series with a resonance inductor 24, provided to tune the resonance frequency of the converter. The power transformer generates two outputs OUT1, OUT2, one of which (OUT1) is sent to the tuning adapter 25, the other (OUT2) to a tuner capacitor 26 and to a shunt resistor 27. The tuning adapter and the tuning capacitor, connected to each other, form a L-C filter which is tuned to the resonance frequency of the ultrasonic transducer. The tuning adapter is therefore the device which, connected to an output connecter, supplies the energy to the ultrasonic emitter. The shunt resistor reads the current sent to the ultrasonic emitter and forwards the value of this current to a device 28 named the "transducer connection sensor" which, on the basis of the value of the current, identifies the connection of the ultrasonic transducer and sends an enabling signal to a power and overload measuring device 29. The latter is connected to the output of the tuning adapter and includes a resistive divider which sends a power measuring signal suitable to be read by an external instrument and to be sent to the micro-controller to be elaborated and governed.

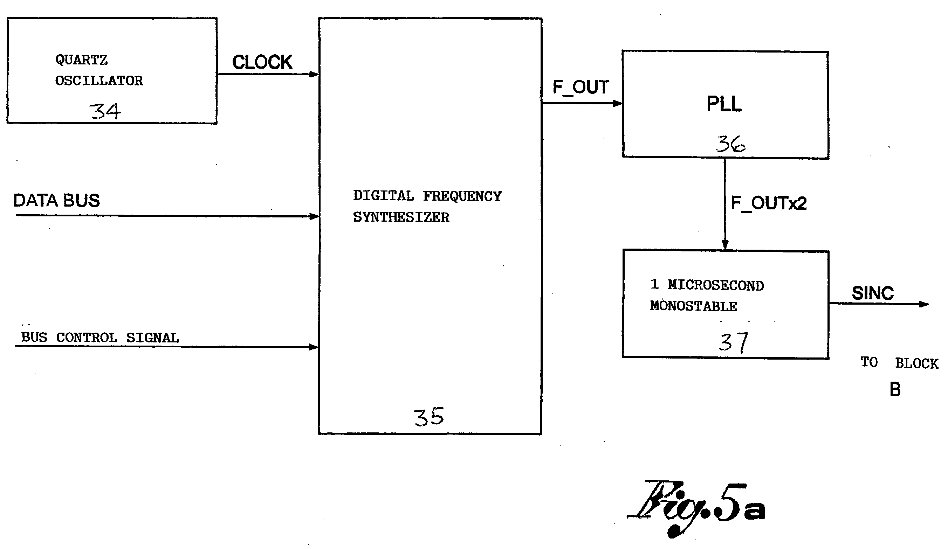

The phase and frequency control device is made up of two parts: a first part for phase control (Fig. 5) which receives the signals coming from the converter and generates the signals forwarded to the micro-controller in output, and a second part for frequency control (Fog. 5a) which receives signals from the micro-controller and generates an output to the converter.

The first part includes the following modules:
- an optoisolator interface 30 of the piloting signal of the IGPT power transistors from the converter;
- an adjustable delay 31
- an optoisolator interface 32 of the output signal of the power converter OUT_PWM; and
- a section 2 programmable logic module 33 called a "phase comparator"
The optoisolator interface 32 of the OUT_PWM signal galvanically separates this signal and sends it to input B of the phase comparator. This comparator compares the A and B signals and generates correspondingly two outputs UP and DOWN which indicate respectively if A>B and if A<B. The two A and B signals are then sent to the micro-controller.

The second part of the frequency control includes the following devices:
- a quartz oscillator 34;
- a digital frequency synthesizer 35; and
- elaboration devices of the synthesizer output 36, 37.
The quartz oscillator 34 generates a CLOCK signal which, connected to the synthesizer, scans the elaboration sequence of the frequency signal in output from the synthesizer.

The digital frequency synthesizer 35 receives data coming from the micro-controller used to set the output frequency which, on elaboration by a multiplier 36 and a monostable 37 for example, will govern the power converter.

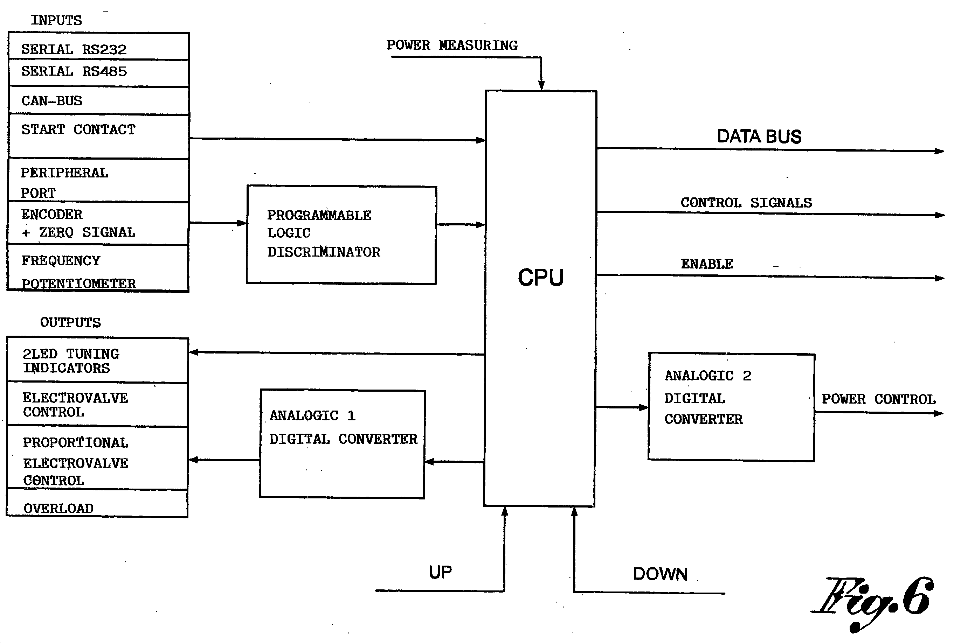

The micro-controller (Fig. 6) is the calculation center for all the generator, that is, it controls all the circuits and logic and analog signals of the equipment. Its main functions are:
- control of the frequency emitted by the generator;
- measurement of the capacity;
- "soft" activation of the emission of the ultrasonic waves
- storing of the latest frequency generated;
- control of all the communications with the outside world;
- automatic carrying out of the welding cycle; and
- storing of the welding cycle operating data.
In particular, the micro-controller receives the UP and DOWN signals in input from the phase control device 33, it elaborates them and sends the resulting signal to the frequency synthesizer 35 together with other control signals. From the power and overload measuring device 19 it receives on the other hand a power measure signal which is elaborated and converted into an analog output signal forwarded to the power converter (Block B), together with the enabling signal. Furthermore, the micro-controller has the following inputs:
- input RS232: used to interface the generator either with a personal computer or remote equipment:
- serial input RS485: used to connect several generators together, in multi-head equipment;
- CAN-BUS input: used in multi-head equipment to connect up several generators and other peripherals which adopt the same transmission protocol;
- "start contact" input: used to manually control the generator, using a push-button or an external contact;
- "encoder plus zero signal" input: used to track the position of the welding head;
- "peripheral address" input: used by the micro-controller to select and forward the various components of the generator peripherals; and
- "potentiometer" input: used to manually control the generator frequency.
Besides the already mentioned outputs to the frequency synthesizer and to the converter, the micro-controller is equipped with the following outputs:
- an output provided to display, using special led diodes, the exact tuning of the generator;
- a proportional electrovalve control output, controlled by a digital-analog converter;
- a electrovalve control output for the lowering of the welding cylinder; and
- a "overload" output provided to activate a luminous indicator should the overload protection in output from the generator intervene.

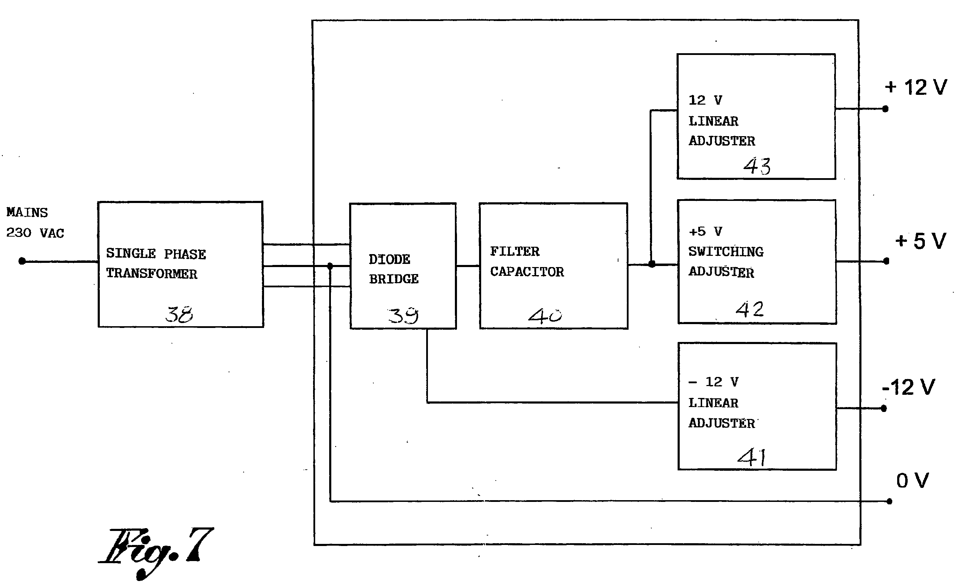

A service logic feeder completes the power generator /Fig. 7) including, as is well known, the following devices:
- a single-phase transformer 38 which supplies the feeder with energy;
- a rectifier 39 and a filter 40 for the output voltage from the single-phase transformer;
- an integrated linear regulator 41 to generate a voltage of +12 Volts;
- a switching regulator 42 to generate a voltage of +5 Volts to feed the generator control logic; and
- a further integrated linear regulator 43 to generate a voltage of -12 Volts.

## Claims

1. Power generator for an ultrasonic welding head made up of an emitter, a mechanical amplifier and a sonotrode, to supply energy to an ultrasonic transducer in the form of a preset alternating amplitude and frequency signal, comprising in combination:
- a power feeder to filter and rectify the mains voltage;
- a power converter, connected to the power feeder, to generate a square wave signal starting from the output signal from the power feeder;
- a power transformer, connected to the converter, designed for making the output square wave signal from the power converter usable by the ultrasonic transducer;
- a phase and frequency control device with the task of controlling the power converter;
- a micro-controller programmed to manage the phase and frequency control device and to control the power converter; and
- a service logic feeder, for digital control of frequency and power of the piloting signal of the ultrasonic transducer, so as to tune the frequency of the generator to that of the emitter and to compensate sonotrode frequency variations.

2. Power generator according to claim 1, wherein the power converter includes a power part made up of a transistor bridge (10) and designed for generating the square wave signal, and a phase controller device (11) controlled by the phase and frequency controller device for generating the control signals of the transistors of the transistors bridge.

3. Power generator according to claim 1 or 2, wherein the power transformer includes:
- a resonance inductor (18) connected to the output of the converter and provided to tune the resonance frequency of the converter itself;
- a tuning adapter (19) and a tuning capacitor (20) on the output of the transformer and designed for of forming, in combination, a tuning filter with the resonance frequency of the ultrasonic transducer.

4. Power generator according to claim 2, wherein the phase and frequency control device includes a phase comparator device (27) for comparing the output signal from the power converter to the control signal of the transistors of the transistor bridge and to forward the result of the comparison to the micro-controller, and a digital frequency synthesizer device (29) controlled by the microprocessor and generating the control signal of the phase control device for piloting the power converter.
